# EUROPEAN PATENT APPLICATION

(11) **EP 4 023 054 A1**
(43) Date of publication of application: **06.07.2022**
(21) Application number: 21199993.3
(22) Date of filing: 29.09.2021
(51) Int. Cl.: A01G 7/04, A01G 22/15

(54) **METHOD FOR IMPROVING THE QUALITY OF FACILITY PLANTING PAK-CHOI BEFORE HARVEST**

(30) Priority: 29.12.2020 CN 202011589689
(71) Applicant: Institute of Urban Agriculture, Chinese Academy of Agricultural Sciences, Chengdu, Sichuan 610000 (CN)
(72) Inventor: ZHENG, Yinjian, Chengdu (CN); YANG, Qichang, Chengdu (CN); XU, Yaliang, Chengdu (CN); BIAN, Zhonghua, Chengdu (CN); WANG, Sen, Chengdu (CN)
(74) Representative: Hamer, Christopher K.

(57) **Abstract**

The disclosure provides a method for improving the quality of a facility planting pak-choi before harvest, belonging to the field of plant cultivation techniques. The method includes: 5-15 days before harvest of the pak-choi, using a white light as a basic light source, and superimposing a radiation with a blue light or UV-A on the pak-choi. The method of the present disclosure can promote the growth of pak-choi, increase the biomass of pak-choi, increase the total content of photosynthetic pigments (chlorophyll a and chlorophyll b) of pak-choi, increase the content of total phenols, flavonoid and anthocyanin of pak-choi, increase the antioxidant capacity, and reduce the nitrate content of pak-choi.

## Description

### TECHNICAL FIELD

The present disclosure relates to the field of plant cultivation techniques, and more particularly to a method for improving the quality of a facility planting pak-choi before harvest.

### BACKGROUND ART

The use of light to regulate the growth and development of pak-choi and the quality of product organs is more precise and easy to operate compared with the regulation of temperature and humidity. Compared with externally administered hormones, the control methods are more time-effective and have no pollution to the environment and no residues in agricultural products.

At present, the lighting type for a large number of pak-choi is still based on supplementary light, and some facility planting pak-choi uses artificial light sources completely, the purpose of which is to provide the necessary energy for the growth of pak-choi photosynthesis. The light quality ratio of the lighting fixtures used is based on the red and blue light with absorption peaks of chlorophyll a and chlorophyll b. However, the lighting type with only the red and blue light band are far from meeting the needs for special light quality in different growth periods of pak-choi, which will lead to increased energy consumption due to poor reference spectrum matching in the application process and non-significant effect of regulating the growth and development of pak-choi.

### SUMMARY

The objective of the present disclosure is to provide a method for effectively improving the quality of a facility planting pak-choi before harvest.

In order to achieve the above objective of the present disclosure, the present disclosure provides the following technical solutions:
The present disclosure provides a method for improving the quality of a facility planting pak-choi before harvest, including: 5-15 days before harvest of the pak-choi, using a white light as a basic light source, and superimposing radiation of a blue light or UV-A on the pak-choi;
a light intensity of the white light is 80-120 µmol·m⁻²·s⁻¹; a light intensity of the blue light or UV-A is 80-120 µmol·m⁻²·s⁻¹; a wavelength of the blue light is 430 nm or 460 nm; and a wavelength of the UV-A is 400 nm or 380 nm;
a light cycle of the white light and the blue light is consistent or a light cycle of the white light and UV-A is consistent;
the light cycle is 12 h of continuous light, and 12 h of continuous darkness;
a facility is used for blocking natural light from entering.

In some embodiments, a time of radiation with blue light and UV-A to the pak-choi is 10 days before harvest.

In some embodiments, the method includes promoting the growth of pak-choi, increasing the biomass of pak-choi, increasing the total content of chlorophyll a and chlorophyll b of pak-choi, increasing the content of total phenols, flavonoid or anthocyanin of pak-choi, reducing the nitrate content of pak-choi or increasing the antioxidant capacity of pak-choi.

In some embodiments, a variety of pak-choi is green-leaf pak-choi or red-leaf pak-choi.

In some embodiments, a CO₂ concentration in the facility is 400 ppm.

In some embodiments, an air humidity in the facility is 85 %.

The beneficial effects of the present disclosure: the present disclosure provides a method for improving the quality of a facility planting pak-choi before harvest, including: 5-15 days before harvest of the pak-choi, using a white light as a basic light source, and superimposing radiation of a blue light or UV-A on the pak-choi. The method of the present disclosure can promote the growth of pak-choi, increase the biomass of pak-choi, increase the total content of photosynthetic pigments (chlorophyll a and chlorophyll b) of pak-choi, increase the content of total phenols, flavonoid and anthocyanin of pak-choi, increase the antioxidant capacity, and reduce the nitrate content of pak-choi.

### BRIEF DESCRIPTION OF THE DRAWINGS

FIG. 1 shows the effect of different supplementary light wavelengths on the morphology of red-leaf pak-choi and green-leaf pak-choi;
FIG. 2 shows the effect of different supplementary light wavelengths on the photosynthetic pigment content of red-leaf pak-choi and green-leaf pak-choi;
FIG. 3 shows the effect of different supplemental light wavelengths on the soluble protein content of red-leaf pak-choi and green-leaf pak-choi;
FIG. 4 shows the effects of different supplementary light wavelengths on the nitrate content of red-leaf pak-choi and green-leaf pak-choi;
FIG. 5 shows the effect of different supplementary light wavelengths on the total phenols content of red-leaf pak-choi and green-leaf pak-choi;
FIG. 6 shows the effect of different supplementary light wavelengths on the total flavonoid content of red-leaf pak-choi and green-leaf pak-choi;
FIG. 7 shows the effect of different supplementary light wavelengths on the total anthocyanin content of red-leaf pak-choi and green-leaf pak-choi;
FIG. 8 shows the effect of different supplementary light wavelengths on the DPPH clearance rate of red-leaf pak-choi and green-leaf pak-choi;
FIG. 9 shows the effect of different complementary light wavelengths on the FRAP clearance rate of red-leaf pak-choi and green-leaf pak-choi.

### DETAILED DESCRIPTION OF THE EMBODIMENTS

The present disclosure provides a method for improving the quality of a facility planting pak-choi before harvest, including: 5-15 days before harvest of the pak-choi, using a white light as a basic light source, and superimposing a radiation of a blue light or UV-A on the pak-choi;
a light intensity of the white light is 80-120 µmol·m⁻²·s⁻¹, preferably 100 µmol·m⁻²·s⁻¹; a light intensity of the blue light or UV-A is 80-120 µmol·m⁻²·s⁻¹, preferably 100 µmol·m⁻²·s⁻¹; a wavelength of the blue light is 430 nm or 460 nm; and a wavelength of the UV-A is 400 nm or 380 nm;
a light cycle of the white light and the blue light is consistent or a light cycle of the white light and UV-A is consistent;
the light cycle is 12 h of continuous light, and 12 h of continuous darkness;

The facility is used for blocking natural light from entering.

In the present disclosure, a time of radiation with blue light and UV-A on the pak-choi is 10 days before harvest. Since the increase of biomass of pak-choi during this period is small and the metabolism of physiological active components is still vigorous, the present disclosure provides supplementary light to pak-choi 5-15 days before harvest, and nutrition and healthy components can be increased on the premise of not losing yield.

In the present disclosure, a light intensity of the blue light or UV-A is 80-120 µmol·m-2·s⁻¹, and the treatment effect is more significant under this light intensity.

In the present disclosure, the light intensity is preferably measured by an optical quantum meter; the light intensity is adjusted by adjusting the distance between the light source and the pak-choi to be treated, or by adjusting the light source current.

In the present disclosure, the method includes promoting the growth of pak-choi, increasing the biomass of pak-choi, increasing the total content of chlorophyll a and chlorophyll b of pak-choi, increasing the content of total phenols, flavonoid or anthocyanin of pak-choi, reducing the nitrate content of pak-choi or increasing the antioxidant capacity of pak-choi.

In the present disclosure, a variety of pak-choi is green-leaf pak-choi or red-leaf pak-choi.

In the present disclosure, the cultivation of the pak-choi preferably includes: soaking the pak-choi seeds, accelerating germination, sowing, and irrigating a nutrient solution for a first cultivation, transplanting the seedlings for a second cultivation and harvesting; a time for soaking seeds is preferably 0.5-1.5 h; soaking seeds in ultrapure water; a temperature for accelerating germination is preferably 23-27°C, more preferably 25°C; the accelerating germination is preferably carried out under dark conditions; a time for accelerating germination is preferably 20-30 h, more preferably 24 h; a carrier for seeding is preferably sponge block. The nutrient solution used in the first cultivation preferably includes the following components: 236.25 mg/L CaNO₃, 151.75 mg/L KNO₃, 10928.75 mg/L NH₄PO₄, 123.25 mg/L MgSO₄; a pH of the nutrient solution used in the first cultivation is preferably 6.0; a time of transplanting the seedlings for cultivation is preferably the three-leaf one-heart stage of pak-choi; a nutrient solution used for transplanting the seedlings for cultivation is preferably 1/2 Hoagland nutrient solution; a temperature during the daytime of transplanting the seedlings for cultivation is preferably 35°C, and a temperature at night is preferably 20°C; a time for transplanting the seedlings for cultivation is preferably 35-45 d, more preferably 40 d; on the basis of using white light as the basic light source, the irradiation with blue light and UV-A on the pak-choi is carried out at the stage of transplantation culture, preferably after the 30th day of transplantation culture.

In the present disclosure, a CO₂ concentration in the facility is preferably 400 ppm; and an air humidity in the facility is preferably 85 %.

The technical solutions in the present disclosure will be described in conjunction with the examples of the present disclosure. Obviously, the described examples are only a part of the examples of the disclosure, rather than all of the examples. Based on the examples of the present disclosure, all other examples obtained by those of ordinary skill in the art without creative work shall fall within the protection scope of the present disclosure.

### EXAMPLE 1

1. This experiment was carried out in a facility planting greenhouse at the College of Horticulture, South China Agricultural University (113.36° E, 23.16° N). Green-leaf pak-choi and red-leaf pak-choi (Brassica campestris ssp. chinensis var. communiscv. green- and red-leaf pak-choi) were used as test materials. The seeds were soaked for 1 h, the accelerating germination was performed under darkness for 24 h at 25 ± 2°C, the seeds were sown in a sponge block (2 cm × 2 cm × 2 cm), and the nutrient solution (236.25 mg/L CaNO₃, 151.75 mg/L KNO₃, 10928.75 mg/L NH₄PO₄, 123.25 mg/L MgSO₄, pH = 6.0) was irrigated thereto. When the seedlings were grown to three-leaf one-heart stage, the seedlings were transplanted to a tank containing 1/2 Hoagland nutrient solution (volume of 20 L), the temperature was 35°C / 20°C (day / night), and the nutrient solution was replaced every 10 days. 30 days after transplanting seedlings, under fully artificial conditions, the experiment was performed: red-leaf pak-choi and green-leaf pak-choi were used as test materials, and blue light, UV-A and white light LEDs were selected as lighting sources (white light LEDs was used as basic light sources for plant growth, blue light and UV-A were used as the light source for treatment), and the light intensity was the same (total light intensity was 200 µmol·m⁻²·s⁻¹, where the intensity of fixed white light was 100 µmol·m⁻²·s⁻¹ as the basic light source, and light intensity of 100 µmol·m⁻²·s⁻¹ was the treatment intensity of blue light or UV-A);
2. The wavelength of supplementary blue light was 430 nm (T430) and 460 nm (T460); the wavelength of supplementary UV-A was 380 nm (T380) and 400 nm (T400).

### 3. Results and analysis

### 3.1 Effects of different supplementary light wavelengths on the growth and biomass of red-leaf pak-choi and green-leaf pak-choi.

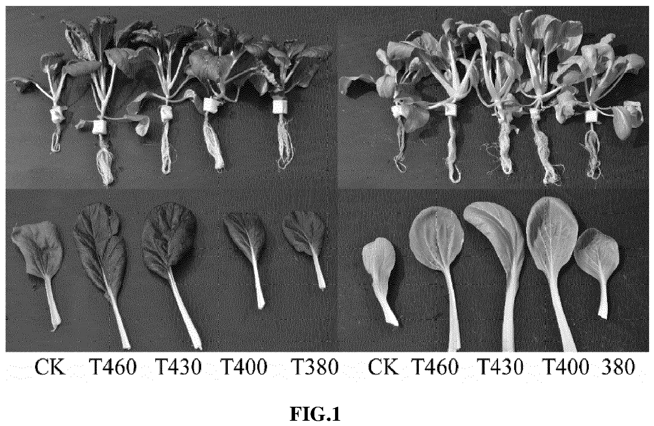

The effect of different supplementary light wavelengths on the morphology of red-leaf pak-choi and green-leaf pak-choi is shown in FIG. 1; different supplementary light wavelengths can significantly affect the fresh (dry) weight of pak-choi (Table 1). Compared with the control group, the fresh weight of green-leaf pak-choi is increased by 79.89 % and 68.52 % under T460 and T430 treatments, respectively, and the fresh weight of red-leaf pak-choi is increased by 80.01 % and 68.79 % under T460 and T430 treatments, respectively. Under T400 and T380 treatments, the fresh weight of green-leaf pak-choi is increased by 50.01 % and 26.77 %, and the fresh weight of red-leaf pak-choi is increased by 56.96 % and 28.18 %, respectively. The dry weight of the two leaf-colored pak-choi has the same changing trend as the fresh weight. Compared with the control group, the green-leaf pak-choi is increased by 62.19 % and the red-leaf pak-choi is increased by 77.98 % under T460 treatment, which has the largest fresh weight of the above-ground part, and the dry weight of the two leaf-colored pak-choi is increased by 111.11 % and 112.50 %, respectively. Compared with the control group, the fresh weight of the underground part in the red-leaf pak-choi under the treatments of T460, T430 and T400 is increased by 134.50 %, 106.43 % and 50.29 %, respectively. The different wavelength treatments show no differential influence on the fresh weight of the underground part in the green-leaf pak-choi, but they are all significantly higher than that of the control group, and the dry weight of the underground part also has the same changing trend.

**Table 1 Effects of different supplementary light wavelengths on the fresh / dry weight of red-leaf pak-choi and green-leaf pak-choi**

| Variety | Treat ment | Fresh weight | | | Dry weight | | |
|---|---|---|---|---|---|---|---|
| | | Whole plant weight (g) | Above-ground part (g) | Underground part (g) | Whole plant weight (g) | Above-ground part (g)) | Underground part (g) |
| Red-leaf pak-choi | CK | 26.37±1.44 d | 24.66±1.65 d | 1.71±0.22 d | 2.41±0.16 d | 0.16±0.02 d | 2.58±0.14 d |
| | T460 | 47.49±0.84 a | 43.89±0.96 a | 4.01±0.12 a | 4.31±0.10 a | 0.35±0.01 b | 4.66±0.09 a |
| | T430 | 44.51±3.08 ab | 40.97±2.97 a | 3.53±0.19 b | 4.01±0.29 a | 0.34±0.01 b | 4.36±0.30 ab |
| | T400 | 41.39±1.17 b | 37.38±1.81 c | 3.60±0.13 b | 3.66±0.18 b | 0.39±0.01 a | 4.05±0.17 b |
| | T380 | 33.80±1.10 c | 31.23±1.07 b | 2.57±0.05 c | 3.06±0.11 c | 0.25±0.01 c | 3.03±0.11 c |
| Green-leaf pak-choi | CK | 32.72±1.83 d | 33.83±2.06 d | 1.97±0.24 c | 3.02±0.20 d | 0.18±0.02 c | 3.21±0.18 d |
| | T460 | 58.86±1.06 a | 54.87±1.20 a | 4.01±0.14 a | 5.37±0.12 a | 0.38±0.01 a | 5.76±0.10 a |
| | T430 | 55.14±3.83 a | 51.22±3.72 a | 3.93±0.13 a | 5.02±0.37 a | 0.38±0.01 a | 5.41±0.37 a |
| | T400 | 50.72±2.19 b | 46.73±2.26 b | 4.01±0.21 a | 4.58±0.22 b | 0.39±0.02 a | 4.96±0.22 b |
| | T380 | 41.48±1.32 c | 39.04±1.34 c | 2.44±0.09 b | 3.83±0.15 a | 0.24±0.01 b | 4.03±0.89 c |

The data in Table 1 is the mean ± standard error, and different letters represent significant differences between the two treatments (a < 0.05), hereinafter inclusive.

### 3.2 Effects of different supplementary light wavelengths on the photosynthetic pigment content of red-leaf pak-choi and green-leaf pak-choi

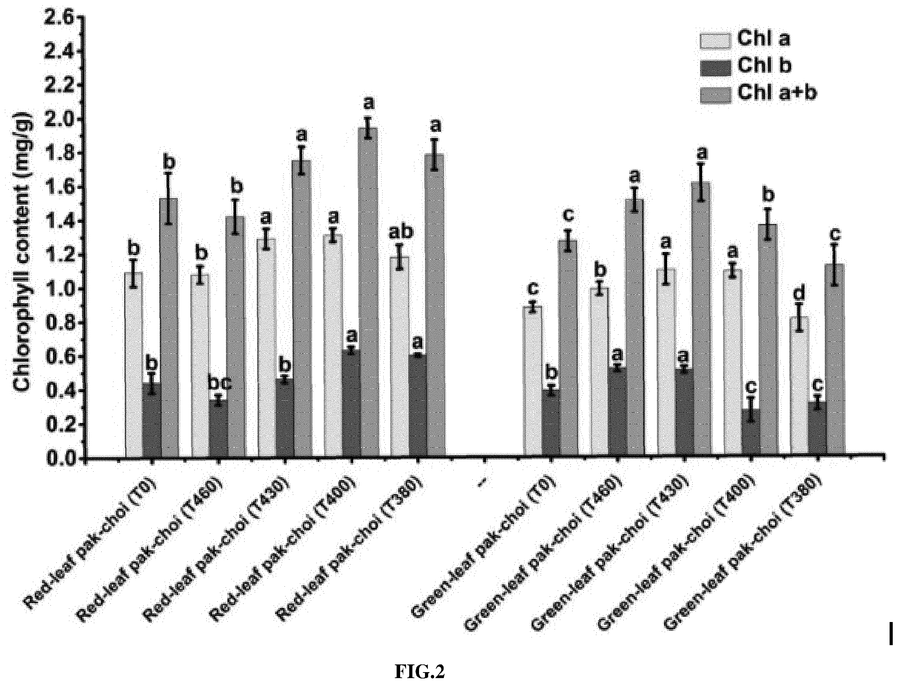

It can be seen from FIG. 2 that compared with the control group, the content of chlorophyll a and total chlorophyll in the red-leaf pak-choi under the treatments of T430, T400 and T380 are increased by 4.55 %, 43.18 % and 36.36 %, 14.38 %, 26.80 % and 16.34 %, respectively. The content of chlorophyll b under the treatments of T400 and T380 is 48.18 % and 36.36 % higher than that in control group.

The content of chlorophyll a, chlorophyll b and total chlorophyll in green-leaf pak-choi show no differential difference between T460 and T430 treatments, but they are all significantly higher than that of the control group, increasing by 33.30 % and 30.77 %, 25.00 % and 26.77, 23.86 % and 7.08 %, respectively. The content of chlorophyll b in red-leaf pak-choi and green-leaf pak-choi under T400 treatment is significantly lower than that of the control group by 38.71 % and 25.81 %, and the content of chlorophyll a and total chlorophyll under T380 treatment are significantly lower than that of the control group by 7.95 % and 3.94 % (FIG. 2).

### 3.3 Effects of different supplementary light wavelengths on the soluble protein and nitrate content of red-leaf pak-choi and green-leaf pak-choi

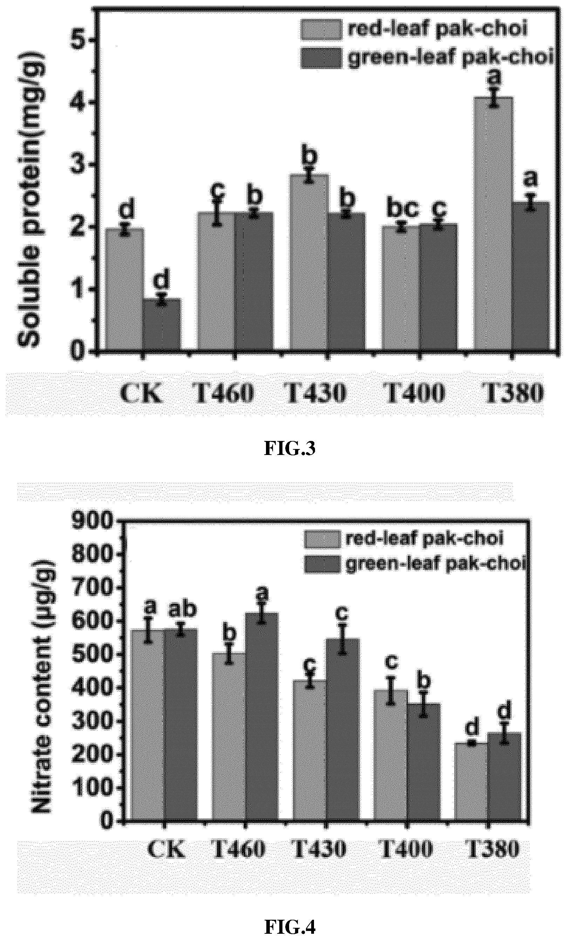

Different wavelengths of supplementary light can increase the soluble protein content of two leaf-colored pak-choi (FIG. 3). The soluble protein content of green-leaf pak-choi and red-leaf pak-choi under T380 treatment is the highest, compared with the control group, increased by 184.52 % and 108.16 %, followed by T430, which is increased by 163.10 % and 44.39 %, respectively. There is no significant difference between the treatment of T400 and T430. The soluble protein content of green-leaf pak-choi and red-leaf pak-choi under T460 treatment is the lowest, with an increase of 164.29 % and 13.27 %, respectively.

FIG. 4 shows that the nitrate content of green-leaf pak-choi under the treatments of T430, T400, and T380 is decreased by 5.16 %, 38.99 %, and 54.00 %, respectively. Compared with the control group, the nitrate content of green-leaf pak-choi under T460 treatment is increased by 8.50 %. The nitrate content of red-leaf pak-choi is all decreased significantly with the blue wavelength becoming shorter. Compared with the control group, the nitrate content of red-leaf pak-choi under the treatments of T460, T430, T400 and T380 is decreased by 12.21 %, 26.44 %, 31.65 % and 59.04 %, respectively.

### 3.4 Effects of different supplementary light wavelengths on the content of nutrition and healthy components of red-leaf pak-choi and green-leaf pak-choi

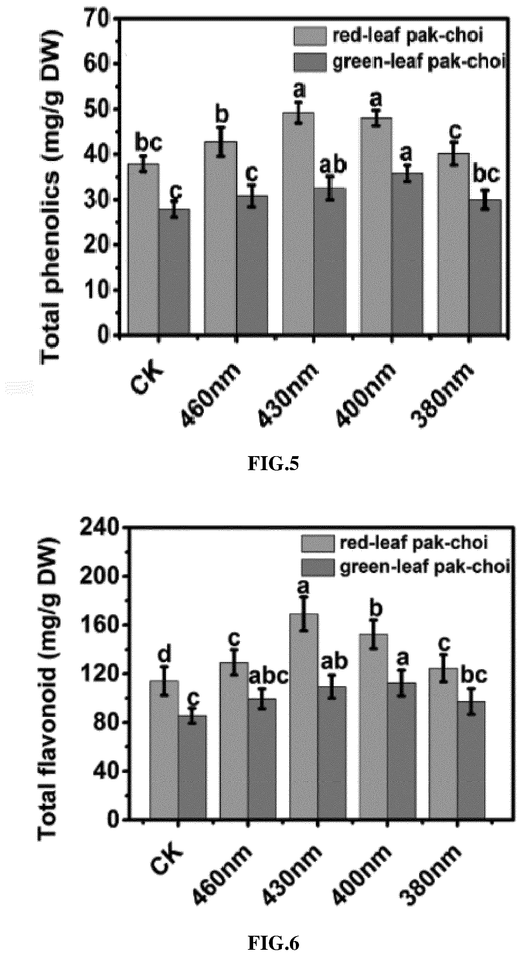

The effect of different supplementary light wavelengths on the total phenols content of two leaf-colored pak-choi is shown in FIG. 5. Compared with the control group, the total phenols content in green-leaf pak-choi and red-leaf pak-choi under T430 treatment is increased by 26.97% and 28.45%, respectively, and the total phenols content in green-leaf pak-choi and red-leaf pak-choi under T400 treatment is increased by 26.91 % and 16.61 %, respectively. The total phenols content of green-leaf pak-choi under T380 treatment is increased by 7.53 % compared with the control group, and the total phenols content of red-leaf pak-choi under T460 treatment is higher than that of the blank control group by 12.89 %.

The effect of different supplementary light wavelengths on the flavonoid content of two leaf-colored pak-choi is shown in FIG. 6. Compared with the blank control group, the flavonoid content of green-leaf pak-choi and red-leaf pak-choi under the treatments of T380, T400 and T430 are increased by 13.58%, 31.25%, 23.76% and 13.58%, 9.21%, 33.68%, respectively.

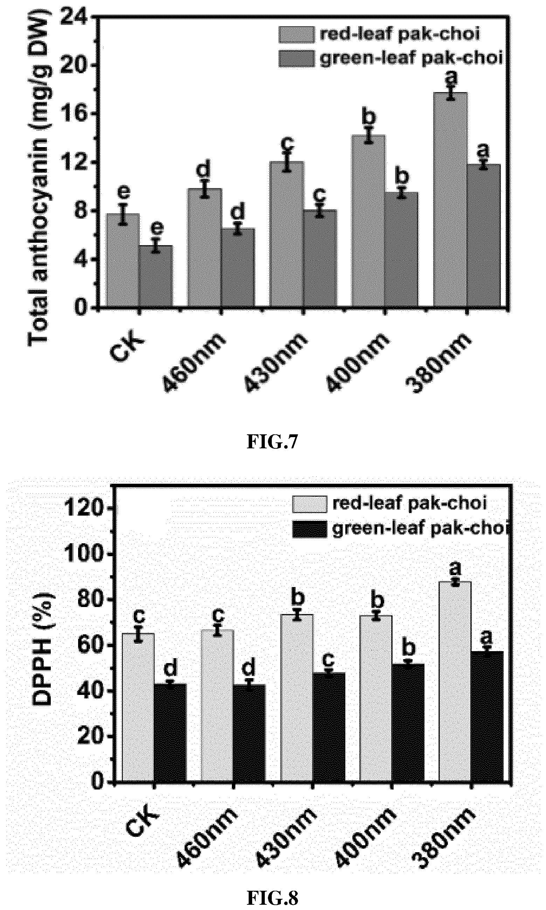

The content of anthocyanin in red-leaf pak-choi is higher than that in green-leaf pak-choi. The effect of different supplementary light wavelengths on the anthocyanin content of two leaf-color pak-choi is shown in FIG. 7. The anthocyanin content of green-leaf pak-choi and red-leaf pak-choi increases significantly with the wavelength of supplementary light becoming shorter. When the pak-choi are treated with light with a wavelength ranging from T460 to T380, the anthocyanin content of green-leaf pak-choi increases from 27.54 % to 130.86 %, and the anthocyanin content of red-leaf pak-choi increases from 27.41 % to 130.26 %.

### 3.5 Effects of different supplementary light wavelengths on the antioxidant capacity of red-leaf pak-choi and green-leaf pak-choi

The effect of different supplementary light wavelengths on the DPPH clearance rate of two leaf-colored pak-choi is shown in FIG. 8. DPPH clearance rate in red-leaf pak-choi under T380 treatment is the highest, which is significantly increased by 35.39 % compared with the control group. Compared with the control group, the DPPH clearance rates under the treatments of T400 and T430 are significantly increased by 12.65 % and 13.13 %, respectively. There is no significant difference in the DPPH clearance rate of red-leaf pak-choi and green-leaf pak-choi under T460 treatment and the blank control group. The DPPH clearance rate of green-leaf pak-choi is decreased significantly with the increase of blue light wavelength, and significantly increased by 33.32 %, 20.61 % and 11.32 % under treatments of T380, T400 and T430 compared with the control group.

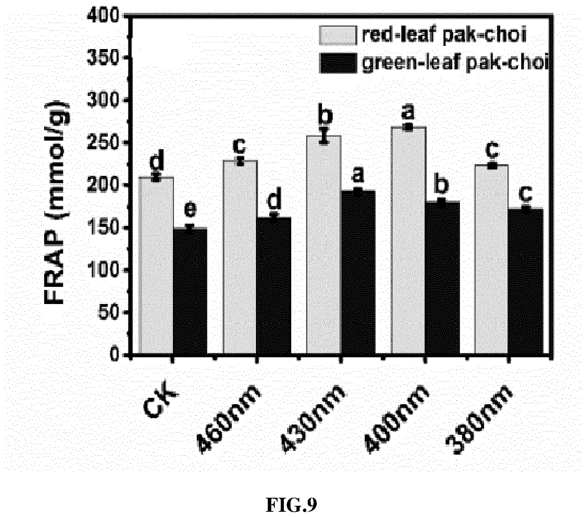

The effect of different supplementary light wavelengths on the FRAP content of two leaf-colored pak-choi is shown in FIG. 9. The FRAP content in red-leaf pak-choi under T400 treatment is the highest, which is 27.89 % higher than that of the blank control group, followed by T380, which is 6.37 % higher than that of the blank control group. Compared with the blank control group, the increase ranges from 8.85 % (T460) to 29.57 % (T430) in green-leaf pak-choi supplemented with different wavelengths.

The above are only the preferred embodiments of the present disclosure. It should be pointed out that for those of ordinary skills in the art, without departing from the principle of the present disclosure, several improvements and modifications can be made, and these improvements and modifications should also be regarded as the protection scope of the present disclosure.

## Claims

1. A method for improving the quality of a facility planting pak-choi before harvest, comprising: 5-15 days before harvest of the pak-choi, using a white light as a basic light source, and superimposing a radiation with a blue light or UV-A on the pak-choi;
a light intensity of the white light is 80-120 µmol·m⁻²·s⁻¹; a light intensity of the blue light or UV-A is 80-120 µmol·m⁻²·s⁻¹; a wavelength of the blue light is 430 nm or 460 nm; a wavelength of the UV-A is 400 nm or 380 nm;
a light cycle of the white light and the blue light is consistent or a light cycle of the white light and UV-A is consistent;
the light cycle is 12 h of continuous light, and 12 h of continuous darkness;
a facility is used for blocking natural light from entering.

2. The method according to claim 1, wherein a time of radiation with blue light and UV-A on the pak-choi is 10 days before harvest.

3. The method according to claim 1 or 2, wherein the method comprises promoting the growth of pak-choi, increasing the biomass of pak-choi, increasing the total content of chlorophyll a and chlorophyll b of pak-choi, increasing the content of total phenols, flavonoid or anthocyanin of pak-choi, reducing the nitrate content of pak-choi or increasing the antioxidant capacity of pak-choi.

4. The method according to claim 1, wherein a variety of pak-choi is green-leaf pak-choi or red-leaf pak-choi.

5. The method according to claim 1, wherein a CO₂ concentration in the facility is 400 ppm.

6. The method according to claim 1, wherein an air humidity in the facility is 85%.
